# EUROPÄISCHE PATENTSCHRIFT

(11) **EP 3 100 822 B1**
(45) Veröffentlichungstag und Bekanntmachung des Hinweises auf die Patenterteilung: **07.08.2019**
(21) Anmeldenummer: 16401035.7
(22) Anmeldetag: 31.05.2016
(51) Int. Cl.: B23Q 11/00, B23Q 11/10

(54) **WERKZEUGMASCHINE MIT EINRICHTUNG ZUR KÜHLSCHMIERSTOFFVERSORGUNG**
MACHINE TOOL WITH DEVICE FOR COOLANT SUPPLY
MACHINE-OUTIL AVEC DISPOSITIF D'ALIMENTATION EN LUBRIFIANT DE REFROIDISSEMENT

(30) Priorität: 01.06.2015 DE 202015102836 U
(43) Veröffentlichungstag der Anmeldung: 07.12.2016
(73) Patentinhaber: Starrag GmbH, 09117 Chemnitz (DE)
(72) Erfinder: Conrad, Peter, 09126 Chemnitz (DE)
(74) Vertreter: Rumrich, Gabriele

(56) Entgegenhaltungen:
- CN-U- 204 108 744
- DE-A1- 3 937 216
- DE-U1-202009 009 535
- US-A1- 2001 023 628

## Beschreibung

Die Erfindung betrifft eine Werkzeugmaschine, insbesondere ein Bearbeitungszentrum, mit einer Einrichtung zur Kühlschmierstoffversorgung nach dem Oberbegriff des ersten Patentanspruchs.

Kühlschmierstoffe dienen in der Fertigungstechnik beim Trennen und Umformen auf Werkzeugmaschinen der Wärmeabfuhr und Verminderung der Reibung zwischen Werkzeug und Werkstück durch Schmierung. Zusätzlich dienen sie bei einigen Zerspannungsprozessen zur Entfernung der Späne durch Abspülen aus dem Arbeitsumfeld. Kühlschmierstoff wird einer Werkzeugmaschine in Form von Niederdruck und Hochdruck bereitgestellt, um Kühl-, Schmier- und Spülfunktionen zu realisieren. Darüber hinaus dient er auch zur thermischen Stabilisierung.

Bekannt ist die Anordnung der Kühlschmierstoffversorgung außerhalb der Maschine, wodurch eine große Anzahl an Leitungen über teilweise lange Strecken zur Werkzeugmaschine führen müssen, was einen erheblichen Aufwand darstellt.

Durch verschiedene Anforderungen der auf der Werkzeugmaschine laufenden Bearbeitung, der Platzverhältnisse in den Fertigungsstätten und der Organisation der Produktion (zentrale oder dezentrale Kühlschmierstoffaufbereitung) gibt es wenige Standardausführungen für Kühlschmierstoffeinrichtungen, aber darüber hinaus eine sehr große Anzahl von auf Kunden zugeschnittene Sonderlösungen.

Standardlösungen sind von allen großen Herstellern von Kühlschmierstoffeinrichtungen bekannt. Dabei handelt es sich um Kühlschmierstoffeinheiten, welche Filter- und Reinigungseinrichtungen aufweisen, und welche mit Pumpen zur Versorgung einer Werkzeugmaschine mit Hochdruck und Niederdruck ausgestattet sind. Bei Bedarf sind diese mit einem Verteiler für Niederdruck versehen, um der Werkzeugmaschine mehrere Kreise zur Verfügung zu stellen. Hat ein Kunde eine zentrale Kühlmittelaufbereitung, dann wird eine Werkzeugmaschine mit einer sogenannten Druckerhöhungsstation ausgerüstet, welche in der Regel für jede Maschine neu konzipiert wird.

Nachteilig ist, dass die Standardausführungen bei besonderen Kundenanforderungen immer aufwendig angepasst werden müssen, was im Laufe der Zeit zu einer großen Vielfalt an derartigen Anlagen führt.

In der Druckschrift DE 20 2009 009 535 U1 wird eine gattungsgemäße Einrichtung beschrieben, bei welcher eine Filtereinheit mit einem Späneförderer als mobile Einheit verbunden ist.

Aus der Druckschrift US 5,849,183 A ist eine gattungsgemäße Einrichtung bekannt, welche unter dem Späneförderer einen Behälter aufweist, was insgesamt ebenfalls eine Einheit bildet.

In EP 1 474 268 B1 und US000004751006A werden gattungsgemäße Einrichtungen beschrieben, welche einen Späneförderer und eine Filtereinrichtung kombinieren. DE 39 37 216 A1 offenbart auch eine gattungsgemäße Werkzeugmaschine.

Diese Anlagen integrieren die gesamte Kühlschmierstoffeinrichtung in die Werkzeugmaschine. Der Nachteil dieser Lösungen ist, dass diese kaum modifizierbar und auf Kundenanforderungen anpassbar und somit nicht flexibel einsetzbar sind.

Wenn ein Kunde eine zentrale Kühlschmierstoffaufbereitung besitzt, sind bisher teure Druckerhöhungsstationen erforderlich. Teuer vor allem deshalb, weil diese in geringen Stückzahlen als Sondereinheiten bezogen werden müssen. Insbesondere Lösungen von Fertigungsinseln, wo zwei bis drei Maschinen gemeinsam versorgt werden, scheiterten in der Vergangenheit oft an den Kosten. Bisher erfolgt die Verlegung der Rohre zwischen Kühlschmierstoffaggregat und Maschine noch überwiegend auf dem Fußboden, was störend ist oder oberhalb, was einen hohen Aufwand bedeutet.

Aufgabe der Erfindung ist es, eine Werkzeugmaschine, insbesondere ein Bearbeitungszentrum, mit einer Einrichtung zur Kühlschmierstoffzuführung zu entwickeln, welche die bisherige Variantenvielfalt einschränkt und dennoch flexibel auf Werkzeugmaschinen und Kundenanforderungen anpassbar ist und die auf Grund der dann größeren Stückzahl gleicher oder ähnlicher Bauteile zur Kostensenkung führt.

Diese Aufgabe wird mit den Merkmalen des ersten Patentanspruchs gelöst.

Vorteilhafte Ausgestaltungen ergeben sich aus den Unteransprüchen.

Die Werkzeugmachine, insbesondere ein Bearbeitungszentrum mit einer Einrichtung zur Kühlschmierstoffzuführung, ist bekannter Weise ausgestattet mit
- einer Filtereinrichtung mit Behälter,
- mindestens einer Niederdruckpumpe,
- einer Niederdruckverteilung,
- eine Hochdruckpumpe und
- einer Rückförderpumpe,
wobei erfindungsgemäß die Filtereinrichtung mit Behälter und mindestens eine Niederdruckpumpe als separate Baueinheit ausgeführt sind und die Niederdruckverteilung und Hochdruckpumpe in die Werkzeugmaschine / das Bearbeitungszentrum integriert sind und wobei die Werkzeugmaschine / das Bearbeitungszentrum und die Filtereinrichtung mit Behälter mit der Niederduckleitung und der Rückpumpleitung verbunden sind.

Es ist ebenfalls möglich, weitere Niederdruckpumpen, ggf. mit höherem Druck, in die Werkzeugmaschine zu integrieren.

Ebenfalls können Filtereinrichtungen mit mehr als einer Niederduckpumpe ausgestattet sein, wobei diese jeweils mit einer Werkzeugmaschine mit je einer Niederduckleitung und einer Rückpumpleitung verbunden sind.

Die Werkzeugmaschinen weisen durch die erfindungsgemäße Lösung vorteilhafter Weise eine einheitliche einfache Schnittstelle für die Kühlschmierstoffversorgung auf. Bei der vorgeschlagenen Lösung ist es unerheblich, ob die Versorgung von einer Zentrale oder von einem der Maschine zugeordneten Kühlschmierstoffaggregats kommt, oder ob als Sonderlösung zwei bis drei Maschinen von einem Kühlschmierstoffaggregat bedient werden sollen. Es wird mit der vorgeschlagenen Lösung eine Reduzierung der Kosten auch deshalb eintreten, weil die Variantenvielfalt reduziert werden kann. Darüber hinaus lässt sich das Problem der Rohrverlegung von oben besser lösen.

Es sind bei einer Variante, welche mehrere Werkzeugmaschinen mit Kühl-Schmierstoff versorgt, mit der erfindungsgemäßen Lösung als Verbindung zur jeweiligen Maschine nur zwei Rohre und ein Kabelkanal (bevorzugt mit Trennsteg), sofern die Filtereinrichtung von der Werkzeugmaschine/dem Bearbeitungszentrum die Stromversorgung über den Kabelkanal erhält, erforderlich.

Ein weiterer Vorteil besteht darin, dass, das Kühlmittelkonzept, insbesondere das Filterverfahren, optimal auf die jeweiligen Werkzeugmaschinen bzw. Bearbeitungszentren abgestimmt werden kann.

Die Niederdruckverteilung und die Hochdruckpumpe können zu einer in die Werkzeugmaschine integrierte Druckerhöhungsstation zusammengefasst und als Baueinheit in die Werkzeugmaschine integriert sein, d.h. fest mit der Werkzeugmaschine verbunden sein.

Dies bietet den Vorteil, dass mit der Werkzeugmaschine eine konstruktive und transportfähige Einheit in Form einer Kompaktmaschine gebildet wird.

Vorteilhafter Weise wird dazu die Druckerhöhungsstation in oder an einer Funktionseinheit Werkzeugmaschine oder zwischen zwei Funktionseinheiten der Werkzeugmaschine angeordnet.

Eine erste Funktionseinheit kann dabei beispielsweise eine Schaltschrankeinheit und eine zweite Funktionseinheit eine Energieversorgungseinheit der Werkzeugmaschine sein.

Die Schaltschrankeinheit weist dabei ein am Maschinenbett befestigtes Schaltschrankkonsol auf, welches den Schaltschrank trägt. Die Energieversorgungseinheit ist meist von der Schaltschrankeinheit beabstandet und weist ein am Maschinenbett befestigtes Energiekonsol auf. Das Schaltschrankkonsol und das Energiekonsol werden bevorzugt voneinander beabstandet mit dem Maschinenbett verschraubt. Es besteht dann die Möglichkeit, zwischen Schaltschrankkonsol und Energiekonsol einen Querträger anzuordnen und die Druckerhöhungsstation an dem Querträger zu befestigen.

Eine vorteilhafte Ausgestaltung der erfindungsgemäßen Lösung besteht somit darin, dass die in der Maschine befindliche Einrichtung zur Kühlschmierstoffzuführung mit der zugehörigen Kühlmitteltechnik zwischen Schaltschrank und Energiekonsol über dem Späneförderer angeordnet ist.

Die Erfindung wird nachfolgend anhand von Ausführungsbeispielen und zugehörigen Zeichnung näher erläutert. Es zeigen:
Figur 1 eine Variante für die Integration einer Einrichtung zur Kühlschmierstoffversorgung in eine Werkzeugmaschine, schematisch dargestellt,
Figur 2 drei Werkzeugmaschinen die alle mit nur einer Filtereinrichtung 2 über ihre Schnittstellen S verbunden sind,
Figur 3 mit der Werkzeugmaschine fest verbundene Baueinheit aus Niederdruckverteilung und Hochdruckpumpe zur Bereitstellung einer Druckerhöhungsstation.

Einer Werkzeugmaschine 1 (bzw. einem Bearbeitungszentrum) ist eine Filtereinrichtung 2 zugeordnet, wobei zwischen Werkzeugmaschine 1 und Filtereinrichtung 2 bevorzugt eine Schnittstelle S vorgesehen ist und die Filtereinrichtung 2 einen Behälter 3 aufweist und mit einem Filter 4 ausgestattet ist. Die Filtereinrichtung 2 weist weiterhin eine erste Niederdruckpumpe 5 auf und ist über eine Niederdruckleitung 6 mit einer Niederdruckverteilung 7 der Werkzeugmaschine 1 verbunden.

Die Niederdruckverteilung 7, die beispielsweise in Form einer Ventilsäule ausgebildet ist, weist hier drei Ventile auf. Ein erstes Ventil 3.1 stellt beispielsweise Kühlschmierstoff für eine nicht dargestellte Schwalldusche zur Verfügung, ein zweites Ventil 8.2 versorgt beispielsweise einen Düsenring mit Kühlschmierstoff und ein drittes Ventil 8.3 steuert die Spülung des Maschinenbetts zur thermischen Stabilisierung, wobei der verbrauchte Kühlschmierstoff in einen in die Werkzeugmaschine integrierten Späneförderer, der als Auffangbehälter 9 dient, abfließt und aus diesem mittels einer Rückförderpumpe 10 über eine Rückpumpenleitung 11 über den Filter 4 der Filtereinrichtung 2 und somit in den Behälter 3 rückgefördert wird.

In der Werkzeugmaschine 1 zweigt vor der Niederdruckverteilung 7 von der Niederdruckleitung 6 eine Hockdruckleitung 12 ab, über welche mittels einer Hochdruckpumpe 13 Kühlschmierstoff mit einem hohen Druck bereitgestellt wird, der beispielsweise der nicht dargestellten Spindel zu deren Innenkühlung zugeführt wird und ebenfalls in den Auffangbehälter 9 abfließt.

Durch diese erfindungsgemäße Einrichtung zur Kühlschmierstoffversorgung der Werkzeugmaschine 1 sind zwischen der Filtereinrichtung 2 und der Werkzeugmaschine 1 nur noch zwei Leitungen erforderlich, nämlich die Niederdruckleitung 6 und die Rückpumpenleitung 11. Die Leitungen 6 und 11 können durchgängig ausgebildet sein oder im Bereich der Schnittstelle S Verbindungsarmaturen aufweisen.

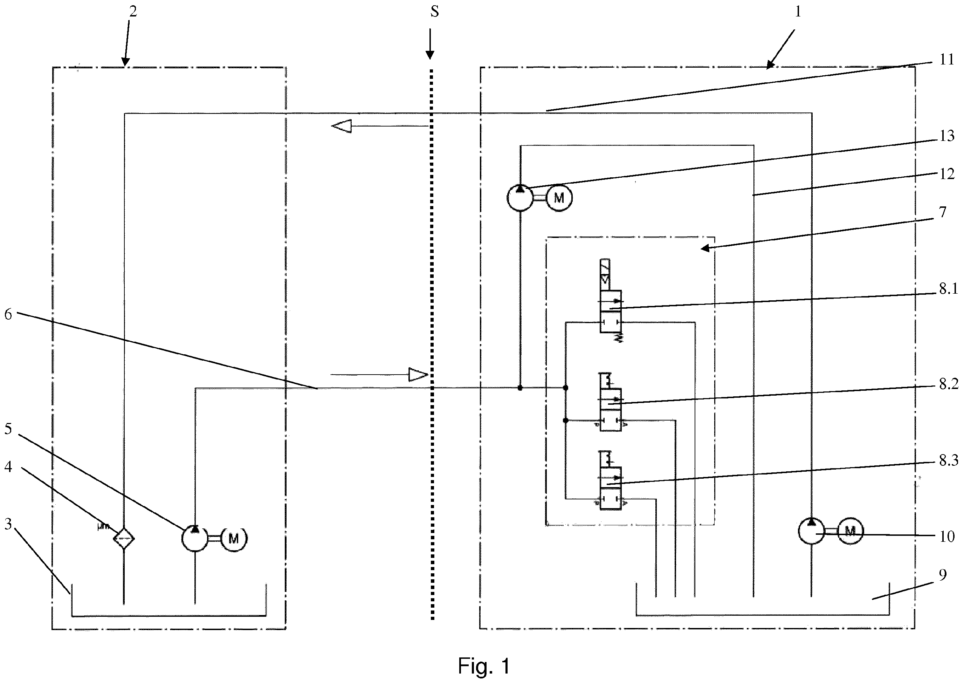

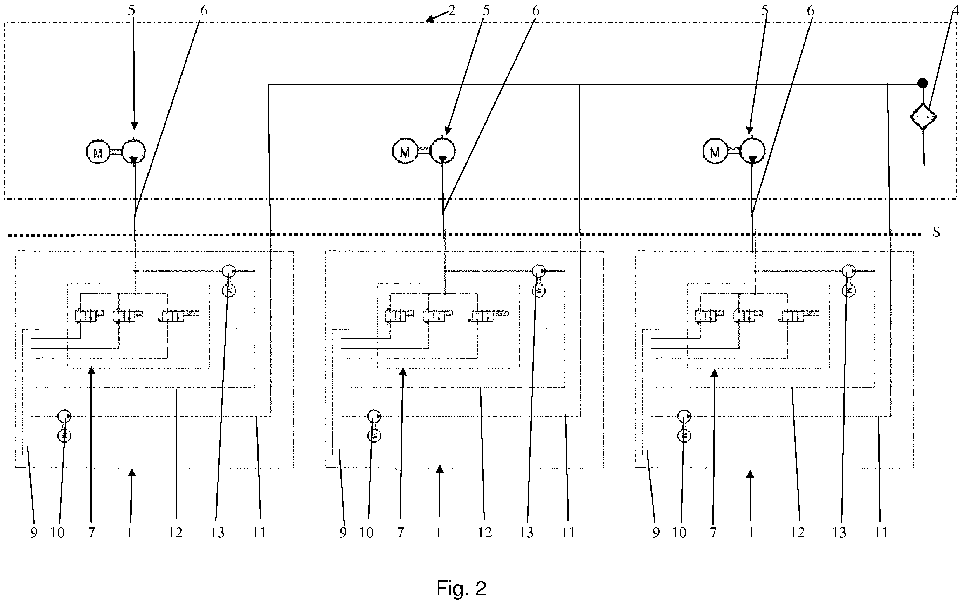

Die Filtereinrichtung kann auch mehrere Niederdruckpumpen aufweisen, wobei jede Niederdruckpumpe den Kühlschmierstoff für eine Werkzeugmaschine zur Verfügung stellt. Gemäß Figur 2 sind drei Werkzeugmaschinen 1 bzw. Bearbeitungszentren mit nur einer Filtereinrichtung 2 über ihre Schnittstellen S verbunden. Die hier zentrale Filtereinrichtung 2 weist drei Niederdruckpumpen 5 auf, welche über jeweils eine Leitung 6 aus einem hier nicht dargestellten Behälter 3 Kühlschmierstoff zu den Werkzeugmaschinen 1 fördern. Die Werkzeugmaschinen 1 sind im Wesentlichen gleich zu der in Figur 1 schematisch dargestellten Werkzeugmaschine 1 hinsichtlich der Kühlschmierstoffversorgung ausgestattet und sind ebenfalls über eine Niederdruckleitung 6, die mit der Filtereinrichtung 2 in Verbindung steht, mit der Niederdruckverteilung 7 der Werkzeugmaschine 1 verbunden. Auch hier fließt der verbrauchte Kühlschmierstoff in einen in die Werkzeugmaschine 1 integrierten Späneförderer, der als Auffangbehälter 9 dient. In der Werkzeugmaschine 1 zweigt wie in Figur 1 dargestellt, vor der Niederdruckverteilung 7 von der Niederdruckleitung 6 eine Hockdruckleitung 12 ab, über welche mittels einer Hochdruckpumpe 13 Kühlschmierstoff der nicht dargestellten Spindel zugeführt wird und ebenfalls in den Auffangbehälter 9 abfließt.

Aus dem Auffangbehälter 9 (Späneförderer) wird der Kühlschmierstoff mittels der Rückförderpumpe 10 über die Rückpumpenleitung 11 hier über den nur einen zentralen Filter 4 der zentralen Filtereinrichtung 2 in den hier nicht dargestellten Behälter der Filtereinrichtung 2 zurückgefördert.

Alternativ kann der Niederdruck gemäß eines nicht dargestellten Ausführungsbeispiels für eine oder mehrere Werkzeugmaschinen bzw. Bearbeitungszentren auch durch eine zentrale Niederdruckanlage mit einer entsprechenden Niederdruckpumpe bereitgestellt werden und in diesem Fall auch bevorzugt eine zentrale Filtereinrichtung vorgesehen sein. Die Werkzeugmaschine wird dann mit der entsprechenden Schnittstelle (die entsprechende Anschlussarmaturen aufweist) ausgeliefert und die Niederdruckleitung der Werkzeugmaschine an die zentrale Niederdruckversorgung angeschlossen sowie die Rückförderleitung der Werkzeugmaschine mit der zentralen Filtereinrichtung gekoppelt.

Die Werkzeugmaschine weist in allen vorgenannt beschriebenen Varianten im Wesentlichen die gleiche Ausstattung hinsichtlich der Kühlschmierstoffverteilung auf und wird je nach den Voraussetzungen beim Kunden entweder an eine der Maschine zugeordnete Filtereinrichtung angeschlossen oder mit einer zentralen Filtereinrichtung verbunden. Es sind an der Schnittstelle der Werkzeugmaschine nur zwei Leitungsanschlüsse erforderlich, da nur zwei Leitungen zur Filtereinrichtung führen.

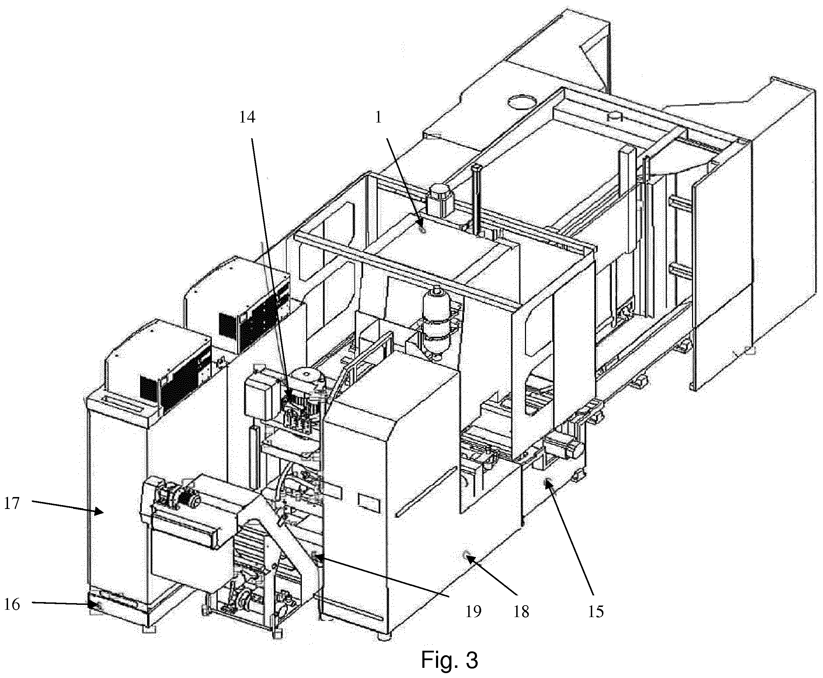

Gemäß Figur 3 sind eine Niederdruckverteilung 7 und eine Hochdruckpumpe 13 zu einer in die Werkzeugmaschine 1 integrierten Druckerhöhungsstation 14 zusammengefasst und als Baueinheit mit der Werkzeugmaschine 1 fest verbunden.

Ein am Maschinenbett 15 verschraubtes Schaltschrankkonsol 16 trägt einen Schaltschrank 17, während dem gegenüberliegend ein mit dem Maschinenbett 15 verschraubtes sogenanntes Energiekonsol 18 angeordnet ist, auf welchem weitere fluidtechnische Ausrüstung (Hydraulik, Pneumatik, Schmierung) befestigt ist.

Zwischen Schaltschrankkonsol 16 und Energiekonsol 18 ist an einem die beiden Konsolen 16 und 18 verbindenden Querträger 19 die integrierte Druckerhöhungsstation 14, hier über dem nicht bezeichneten Späneförderer angeordnet.

Es ergibt sich mithin eine Integration von Niederdruckverteilung 7 und Hochdruckpumpe 13 direkt in die Werkzeugmaschine 1 bzw. den Maschinenverbund.

Der besondere Vorteil ist, dass somit eine Kompaktmaschine ausgeführt ist, bei welcher die Niederdruckverteilung 7 und die Hochdruckpumpe 13 sowohl funktionell als auch baulich fester Bestandteil der Werkzeugmaschine 1 sind und beim Transport mit dieser eine Einheit bilden.

Niederdruckverteilung 7 und Hochdruckpumpe 13 können auch an anderen Maschinenkomponenten angeordnet werden, z.B. direkt am Energiekonsol 18.

Die in die Werkzeugmaschine 1 integrierte Einrichtung zur Kühlschmierstoffzuführung, beispielsweise die Druckerhöhungsstation 14, mit der zugehörigen Kühlmitteltechnik kann auch anderweitig über dem Späneförderer bzw. über dem Maschinenbett 15 angeordnet sein, beispielsweise mittels einer sich auf dem Maschinenbett 15 abstützenden Konsole.

Die Integration der Niederdruckleitung und der Hochdruckpumpe in eine Druckerhöhungsstation 14, welche eine Verbindung zu Maschinenkomponenten der Werkzeugmaschine 1 herstellt und in die Werkzeugmaschine 1 integriert ist, bietet erhebliche Vorteile, da damit das Transportvolumen reduziert und der Montageaufwand verringert wird. Auch der Platzbedarf reduziert sich.

Insgesamt wird mit der erfindungsgemäßen Lösung die Anzahl der zur Werkzeugmaschine führenden Hydraulikleitungen und der Installationsaufwand erheblich reduziert.

### Bezugszeichenliste

- 1: Werkzeugmaschine
- 2: Filtereinrichtung
- 3: Behälter
- 4: Filter
- 5: Niederdruckpumpe
- 6: Niederdruckleitung
- 7: Niederdruckverteilung
- 8.1: erstes Ventil
- 8.2: zweites Ventil
- 8.3: drittes Ventil
- 9: Auffangbehälter
- 10: Rückförderpumpe
- 11: Rückpumpleitung
- 12: Hockdruckleitung
- 13: Hochdruckpumpe
- 14: Druckerhöhungsstation
- 15: Maschinenbett
- 16: Schaltschrankkonsol
- 17: Schaltschrank
- 18: Energiekonsol
- 19: Querträger
- S: Schnittstelle

## Patentansprüche

1. Werkzeugmaschine (1), insbesondere ein Bearbeitungszentrum, mit einer Einrichtung zur Kühlschmierstoffversorgung, wobei die Einrichtung zur Kühlschmierstoffzuführung ausgestattet ist mit
• einer Filtereinrichtung (2) mit Behälter (3),
• mindestens einer ersten Niederdruckpumpe (5),
• einer Niederdruckverteilung (7),
• eine Hochdruckpumpe (13) und
• einer Rückförderpumpe (10),
**dadurch gekennzeichnet, dass**
• die Filtereinrichtung (2) mit Behälter (3) und mindestens eine erste Niederdruckpumpe (5) als separate Baueinheit ausgeführt sind,
• die Niederdruckverteilung (7) und die Hochdruckpumpe (13) in die Werkzeugmaschine (1) integriert sind und
• die Werkzeugmaschine (1) und die Filtereinrichtung (2) mit Behälter (3) mit der Niederduckleitung (6) und der Rückpumpleitung (11) verbunden sind.

2. Werkzeugmaschine (1) nach Anspruch 1, **dadurch gekennzeichnet, dass** eine oder mehrere zweite Niederdruckpumpen in die Werkzeugmaschine (1) integriert sind.

3. Werkzeugmaschine (1) nach Anspruch 1 oder 2, **dadurch gekennzeichnet, dass** die in die Werkzeugmaschine (1) integrierte/n zweite/n Niederdruckpumpe/n einen höheren Druck bereitstellt/bereitstellen als die erste Niederdruckpumpe (5).

4. Werkzeugmaschine (1) nach einem der Ansprüche 1 bis 3, **dadurch gekennzeichnet, dass** die Filtereinrichtung (2) mit Behälter (3) mit mehr als einer ersten Niederduckpumpe (5) ausgestattet ist und dass je eine erste Niederdruckpumpe (5) jeweils mit einer Werkzeugmaschine (1) mit je einer Niederduckleitung (7) und einer Rückpumpleitung (11) verbunden ist.

5. Werkzeugmaschine (1) nach Anspruch 4, **dadurch gekennzeichnet, dass** in jede Werkzeugmaschine (1) eine Niederdruckverteilung (7) und eine Hochdruckpumpe (13) integriert sind.

6. Werkzeugmaschine (1) nach Anspruch 5, **dadurch gekennzeichnet, dass** die Niederdruckverteilung (7) mit der mit der Filtereinrichtung (2) verbundenen Niederdruckleitung (6) verbunden ist.

7. Werkzeugmaschine (1) nach Anspruch 1, **dadurch gekennzeichnet, dass** die in die Werkzeugmaschine (1) integrierte Niederdruckverteilung (7) und Hochdruckpumpe (13) mit einer zentralen Filtereinrichtung (2) und einer zentralen Niederdruckversorgung gekoppelt ist.

8. Werkzeugmaschine (1) nach Anspruch 5, **dadurch gekennzeichnet, dass** die Niederdruckverteilung (7) und die Hochdruckpumpe (13) zu einer in die Werkzeugmaschine (1) integrierten Druckerhöhungsstation (14) zusammengefasst und als Baueinheit in die Werkzeugmaschine (1) integriert sind.

9. Werkzeugmaschine (1) nach Anspruch 8, **dadurch gekennzeichnet, dass** die Druckerhöhungsstation (14) als Baueinheit fest in die Werkzeugmaschine (1) integriert ist.

10. Werkzeugmaschine (1) nach einem der Ansprüche 8 bis 9, **dadurch gekennzeichnet, dass** die Druckerhöhungsstation in oder an einer Funktionseinheit Werkzeugmaschine oder zwischen zwei Funktionseinheiten der Werkzeugmaschine (1) angeordnet ist.

11. Werkzeugmaschine (1) nach Anspruch 10, **dadurch gekennzeichnet, dass** eine erste Funktionseinheit eine Schaltschrankeinheit und eine zweite Funktionseinheit eine Energieversorgungseinheit der Werkzeugmaschine ist.

12. Werkzeugmaschine (1) nach Anspruch 11, **dadurch gekennzeichnet, dass** die Schaltschrankeinheit ein am Maschinenbett befestigtes Schaltschrankkonsol (16) mit einem Schaltschrank (17) ist und die zweite Funktionseinheit ein am Maschinenbett befestigtes Energiekonsol (18) ist.

13. Werkzeugmaschine (1) nach Anspruch 11 oder 12, **dadurch gekennzeichnet, dass** zwischen Schaltschrankkonsol (16) und Energiekonsol (18) ein das Schaltschrankkonsol (16) und das Energiekonsol (18) verbindender Querträger (19) verläuft, welcher die Druckerhöhungsstation (14) aufnimmt.

## Claims

1. Machine tool (1), in particular a machining center, having a device for cooling lubricant supply, wherein the device for supplying cooling lubricant is equipped with
- a filter device (2) with container (3),
- at least one first low-pressure pump (5),
- a low-pressure distribution (7),
- a high-pressure pump (13) and
- a return pump (10),
**characterized in that**
- the filter device (2) with container (3) and at least one first low-pressure pump (5) are designed as a separate structural unit,
- the low-pressure distribution (7) and the high-pressure pump (13) are integrated into the machine tool (1), and
- the machine tool (1) and the filter device (2) with container (3) are connected to the low-pressure line (6) and the return pump line (11).

2. Machine tool (1) according to claim 1, **characterized in that** one or more second low-pressure pumps are integrated into the machine tool (1).

3. Machine tool (1) according to claim 1 or 2, **characterized in that** the second low-pressure pump(s) integrated into the machine tool (1) provide(s) a higher pressure than the first low-pressure pump (5).

4. Machine tool (1) according to one of claims 1 to 3, **characterized in that** the filter device (2) with container (3) is equipped with more than one first low-pressure pump (5) and **in that** one first low-pressure pump (5) each is connected in each case to a machine tool (1) with one low-pressure line (7) and one return pump line (11) each.

5. Machine tool (1) according to claim 4, **characterized in that** a low-pressure distribution (7) and a high-pressure pump (13) are integrated into each machine tool (1).

6. Machine tool (1) according to claim 5, **characterized in that** the low-pressure distribution (7) is connected to the low-pressure line (6) connected to the filter device (2).

7. Machine tool (1) according to claim 1, **characterized in that** the low-pressure distribution (7) and high-pressure pump (13) which are integrated into the machine tool (1) are coupled to a central filter device (2) and a central low-pressure supply.

8. Machine tool (1) according to claim 5, **characterized in that** the low-pressure distribution (7) and the high-pressure pump (13) are combined to form a pressure-increasing station (14) integrated into the machine tool (1) and are integrated into the machine tool (1) as a structural unit.

9. Machine tool (1) according to claim 8, **characterized in that** the pressure-increasing station (14) is firmly integrated into the machine tool (1) as a structural unit.

10. Machine tool (1) according to one of claims 8 to 9, **characterized in that** the pressure increasing station is arranged in or on a functional unit of the machine tool or between two functional units of the machine tool (1).

11. Machine tool (1) according to claim 10, **characterized in that** a first functional unit is a switchgear cabinet unit and a second functional unit is a power supply unit of the machine tool.

12. Machine tool (1) according to claim 11, **characterized in that** the switch cabinet unit is a switch cabinet bracket (16) which is fastened to the machine bed and comprises a switch cabinet (17), and the second functional unit is an energy bracket (18) fastened to the machine bed.

13. Machine tool (1) according to claim 11 or 12, **characterized in that** a crossbeam (19), which connects the switch cabinet bracket (16) and the energy bracket (18) and accommodates the pressure-increasing station (14), extends between the switch cabinet bracket (16) and the energy bracket (18).

## Revendications

1. Machine-outil (1), en particulier centre d'usinage, avec une installation d'alimentation en lubrifiant-réfrigérant, laquelle installation d'alimentation en lubrifiant-réfrigérant est équipée
• d'une installation de filtration (2) avec récipient (3),
• d'au moins une pompe basse pression (5),
• d'un distributeur basse pression (7),
• d'une pompe haute pression (13) et
• d'une pompe de retour (10),
**caractérisée en ce que**
• l'installation de filtration (2) avec récipient (3) et au moins une première pompe basse pression (5) sont réalisées comme une unité de construction séparée ;
• le distributeur basse pression (7) et la pompe haute pression (13) sont intégrés dans la machine-outil (1) et
• la machine-outil (1) et l'installation de filtration (2) avec récipient (3) sont reliées avec la conduite basse pression (6) et la conduite de pompage de retour (11).

2. Machine-outil (1) selon la revendication 1, **caractérisée en ce qu'**une ou plusieurs deuxièmes pompes basse pression sont intégrées dans la machine-outil (1).

3. Machine-outil (1) selon la revendication 1 ou 2, **caractérisée en ce que** la ou les deuxièmes pompes basse pression intégrées dans la machine-outil (1) délivrent une pression plus élevée que la première pompe basse pression (5).

4. Machine-outil (1) selon l'une des revendications 1 à 3, **caractérisée en ce que** l'installation de filtration (2) avec récipient (3) est équipée de plus d'une première pompe basse pression (5) et **en ce que** chaque première pompe basse pression (5) est reliée à une machine-outil (1) par une conduite basse pression (7) et une conduite de pompage de retour (11).

5. Machine-outil (1) selon la revendication 4, **caractérisée en ce qu'**un distributeur basse pression (7) et une pompe haute pression (13) sont intégrés dans chaque machine-outil (1).

6. Machine-outil (1) selon la revendication 5, **caractérisée en ce que** le distributeur basse pression (7) est relié à la conduite basse pression (6) reliée à l'installation de filtration (2).

7. Machine-outil (1) selon la revendication 1, **caractérisée en ce que** le distributeur basse pression (7) et la pompe haute pression (13) intégrés dans la machine-outil (1) sont couplés à une installation de filtration centrale (2) et à une alimentation en basse pression centrale.

8. Machine-outil (1) selon la revendication 5, **caractérisée en ce que** le distributeur basse pression (7) et la pompe haute pression (13) sont regroupés dans une station de surpression (14) intégrée dans la machine-outil (1) et intégrés sous la forme d'une unité de construction dans la machine-outil (1).

9. Machine-outil (1) selon la revendication 8, **caractérisée en ce que** la station de surpression (14) est intégrée à demeure dans la machine-outil (1) sous la forme d'une unité de construction.

10. Machine-outil (1) selon l'une des revendications 8 à 9, **caractérisée en ce que** la station de surpression est disposée dans ou sur une unité fonctionnelle de machine-outil ou entre deux unités fonctionnelles de la machine-outil (1).

11. Machine-outil (1) selon la revendication 10, **caractérisée en ce qu'**une première unité fonctionnelle est une unité d'armoire électrique et une deuxième unité fonctionnelle est une unité d'alimentation en énergie de la machine-outil.

12. Machine-outil (1) selon la revendication 11, **caractérisée en ce que** l'unité d'armoire électrique est une console d'armoire électrique (16) fixée au socle de la machine avec une armoire électrique (17) et la deuxième unité fonctionnelle est une console d'alimentation en énergie (18) fixée au lit de la machine.

13. Machine-outil (1) selon la revendication 11 ou 12, **caractérisée en ce qu'**une traverse (19) reliant la console d'armoire électrique (16) et la console d'alimentation en énergie (18) s'étend entre la console d'armoire électrique (16) et la console d'alimentation en énergie (18) et reçoit la station de surpression (14).
